# FASCICULE DE BREVET EUROPEEN

(11) **EP 3 461 564 B1**
(45) Date de publication et mention de la délivrance du brevet: **17.08.2022**
(21) Numéro de dépôt: 18193470.4
(22) Date de dépôt: 10.09.2018
(51) Int. Cl.: B07B 1/15, B07B 1/46, F16D 1/02, F16D 1/10

(54) **INSTALLATION DE CRIBLAGE À ÉTOILES ROTATIVES PERMETTANT UN DÉMONTAGE ET UN REMONTAGE RAPIDE DES ARBRES ROTATIFS ET DES ÉTOILES ROTATIVES**
SCREENING-ANLAGE MIT DREHENDEN STERNEN, DIE EINE SCHNELLE DEMONTAGE UND ERNEUTE MONTAGE DER DREHWELLEN UND DREHSTERNE ERMÖGLICHT
ROTATING STAR SCREENING INSTALLATION ALLOWING QUICK DISASSEMBLY AND REASSEMBLY OF THE ROTATING SHAFTS AND ROTATING STARS

(30) Priorité: 29.09.2017 FR 1759075
(43) Date de publication de la demande: 03.04.2019
(73) Titulaire: RMIS, 38630 Veyrins-Thuellin (FR)
(72) Inventeur: BLANC, Dylane, 73100 AIX LES BAINS (FR); GERBELOT, Dominique, 38630 Corbelin (FR)
(74) Mandataire: Germain Maureau

(56) Documents cités:
- EP-A1- 1 348 491
- US-A- 4 311 242
- US-B1- 7 661 537

## Description

La présente invention concerne une installation de criblage à étoiles rotatives, comprenant au moins une table de séparation pour séparer des marchandises en vrac en parties fines passant à travers la table de séparation et en parties grossières évacuées à une extrémité de la table de séparation, la table de séparation comprenant un châssis en forme de cadre et une pluralité d'arbres rotatifs parallèles, chaque arbre rotatif comprenant une pluralité d'étoiles rotatives espacées axialement le long de l'arbre rotatif correspondant.

De manière connue, une installation de criblage à étoiles rotatives du type mentionné ci-avant, également connue sous le terme de « crible à étoiles », comprend une seule table de séparation ou plusieurs tables de séparation au moins partiellement superposées.

Un système d'amenée permet d'apporter les marchandises en vrac qui sont à trier en fonction de leur volume. Ces marchandises entrantes sont déversées sur la première table de séparation, qui présente un premier taux granulométrique. La première table de séparation, via les différentes étoiles rotatives, sépare les marchandises entrantes en parties fines dont le volume est inférieur au premier taux granulométrique et en parties grossières dont le volume est supérieur au premier taux granulométrique. Les parties grossières sont évacuées via un système d'évacuation dédié tandis que les parties fines ainsi séparées sont déversées soit sur un système d'évacuation dédié, soit sur une autre table de séparation dont le taux granulométrique est inférieur au premier taux granulométrique.

Classiquement, chaque table de séparation comprend un châssis en forme de cadre, typiquement de forme rectangulaire. Une série d'arbres rotatifs parallèles entre eux sont échelonnés sur la longueur de la table de séparation. Chaque arbre rotatif comprend une pluralité d'étoiles rotatives espacées axialement le long de l'arbre rotatif correspondant. Le taux granulométrique est par exemple ajusté en fonction de la forme ou du diamètre des étoiles rotatives ou bien encore en fonction de l'espace axial séparant les étoiles rotatives le long de l'arbre rotatif.

Pour chaque table de séparation, le train d'étoiles rotatives constitué par les arbres rotatifs et les étoiles rotatives montées sur ces derniers peut faire l'objet de modifications à des fins de remplacement d'étoiles en raison de leur usure, de changement de diamètres et de type d'étoiles rotatives, de modification des espaces entre les étoiles ou bien encore en raison de casses d'éléments divers de l'installation.

Typiquement, une installation de criblage à étoiles rotatives prévoit que chaque arbre rotatif est d'un seul tenant et monté à rotation à ses deux extrémités dans des paliers solidaires du châssis. L'une des extrémités de l'arbre rotatif comprend des moyens pour s'accoupler à un mécanisme d'entraînement. Classiquement, ces moyens comprennent une roue entraînée en rotation par une chaine elle-même mise en mouvement directement ou indirectement par un moteur, notamment de type électrique.

Lorsqu'une modification du train d'étoiles est souhaitée ou nécessaire, ces opérations sont particulièrement longues, fastidieuses et sujettes à erreurs, les rendant en outre souvent rédhibitoires pour de petites modifications. En effet, il est compris de ce qui précède que toute modification sur le train d'étoiles nécessite un démontage complet du mécanisme d'entrainement et un démontage difficile et complet de tous les paliers. Ce principe manque d'efficacité, de simplicité et de convivialité dans la maintenance dans le temps. De plus, il va de soi que le temps nécessaire à ce travail est trop long. En outre, le principe de démontage complet implique un risque élevé d'erreurs dans le remontage ultérieur.

Cette situation n'est pas satisfaisante et il existe un besoin de répondre à cette problématique.

Le document EP1348491 décrit un dispositif selon le préambule de la revendication 1 pour séparer les fractions fines et les fractions grossières d'un matériau en vrac, comportant un châssis soutenant une grille de tamis pour retenir la fraction grossière et permettre à la fraction fine de passer au travers, la grille de tamis étant constituée d'un certain nombre de disques de tamis, qui sont disposés en groupes et de manière amovible sur des arbres d'entraînement tournants. Ces arbres comportent des deux côtés un roulement monté avec des extrémités de roulement dans un premier et un second roulement sur le châssis et au moins une extrémité étant entraînée avec les moyens d'entraînement, les extrémités de roulement étant partagées dans un élément de l'arbre constant avec l'arbre et dans un élément de roulement monté dans les premier et second roulements sur le châssis. L'élément de roulement interagit avec l'élément de l'arbre constant en co-rotation, où dans les deux extrémités de roulement l'élément de l'arbre constant et l'élément de roulement peuvent être couplés l'un à l'autre et peuvent être désaccouplés l'un de l'autre par un mouvement de l'arbre transversal selon la direction principale de l'axe.

Le document US4311242 décrit également une installation semblable où le couplage des arbres se fait par emboîtement axial.

La présente invention vise à résoudre tout ou partie des inconvénients listés ci-dessus.

Dans ce contexte, il existe un besoin de fournir une installation de criblage à étoiles rotatives qui soit robuste, qui permette un démontage et un remontage aisés et rapides de tout ou partie du train d'étoiles, qui supprime les risques d'erreurs de remontage et qui soit simple et conviviale d'utilisation.

A cet effet, il est proposé une installation de criblage à étoiles rotatives, comprenant au moins une table de séparation pour séparer des marchandises en vrac en parties fines passant à travers la table de séparation et en parties grossières évacuées à une extrémité de la table de séparation, la table de séparation comprenant un châssis en forme de cadre et une pluralité d'arbres rotatifs parallèles, chaque arbre rotatif comprenant une pluralité d'étoiles rotatives espacées axialement le long de l'arbre rotatif correspondant, chaque extrémité de chaque arbre rotatif étant montée sur le châssis par l'intermédiaire d'un mécanisme de guidage offrant une liaison pivot, l'installation de criblage comprenant un mécanisme d'entrainement agencé le long d'un bord longitudinal du châssis et accouplé à une extrémité de chacun des arbres rotatifs afin d'entrainer les arbres rotatifs dans un mouvement de rotation, installation dans laquelle chaque arbre rotatif est subdivisé au niveau d'au moins l'une de ses extrémités en une première partie d'arbre accouplée au mécanisme d'entrainement et une deuxième partie d'arbre sur laquelle les étoiles rotatives sont montées, la première partie d'arbre comprenant un premier organe d'accouplement et la deuxième partie d'arbre comprenant un deuxième organe d'accouplement, les premier et deuxième organes d'accouplement pouvant occuper une configuration d'accouplement dans laquelle les premier et deuxième organes d'accouplement sont en prise mutuelle d'une manière telle que la première partie d'arbre est couplée en rotation avec la deuxième partie d'arbre, chaque arbre rotatif comprenant un mécanisme de verrouillage fonctionnant par serrage radial transversalement à l'axe de l'arbre rotatif et pouvant occuper une configuration de verrouillage dans laquelle le mécanisme de verrouillage bloque, sous l'effet dudit serrage radial, les premier et deuxième organes d'accouplement dans la configuration d'accouplement.

L'installation de criblage peut en outre présenter les caractéristiques listées ci-dessous, prises isolément ou en combinaison :
- le mécanisme de verrouillage comprend une bague de serrage radial constituée par une pièce indépendante de la première partie d'arbre et indépendante de la deuxième partie d'arbre, et exerçant un serrage radial centripète des premier et deuxième organes d'accouplement dans la configuration d'accouplement,
- la bague de serrage radial est axialement positionnée le long de l'arbre rotatif dans une zone située à l'intérieur du cadre du châssis,
- la bague de serrage radial est axialement positionnée le long de l'arbre rotatif du côté opposé au mécanisme d'entrainement par rapport au mécanisme de guidage correspondant,
- dans la configuration de verrouillage du mécanisme de verrouillage, un intervalle radial est interposé entre la bague de serrage radial et une partie de serrage radial complémentaire, le mécanisme de verrouillage comprenant des moyens générant un effort sollicitant radialement la bague de serrage radial en direction de la partie de serrage radial complémentaire et/ou générant un effort sollicitant radialement la partie de serrage radial complémentaire en direction de la bague de serrage radial,
- la partie de serrage radial complémentaire est solidaire de la première partie d'arbre ou de la deuxième partie d'arbre,
- la partie de serrage radial complémentaire vient de matière avec le reste de la première partie d'arbre et la bague de serrage radial et la partie de serrage radial complémentaire enserrent le deuxième organe d'accouplement,
- le passage vers la configuration d'accouplement se pratique par un déplacement relatif radial entre les premier et deuxième organes d'accouplement,
- l'un des premier et deuxième organes d'accouplement est constitué par une portion mâle s'étendant depuis le reste de la partie d'arbre correspondante et l'autre des premier et deuxième organes d'accouplement est constitué par une empreinte creuse de forme complémentaire à ladite portion mâle de sorte à pourvoir accueillir au moins une partie de ladite portion mâle et partiellement ouverte transversalement à l'axe de l'arbre rotatif de sorte à permettre la mise en place de ladite portion mâle dans l'empreinte creuse par un déplacement relatif radial entre ladite portion mâle et l'empreinte creuse transversalement à l'axe de l'arbre rotatif,
- la portion mâle constitue le deuxième organe d'accouplement solidaire de la deuxième partie d'arbre et l'empreinte creuse constitue le premier organe d'accouplement solidaire de la première partie d'arbre,
- la portion mâle présente une section de coupe, dans un plan orienté transversalement à l'axe de l'arbre rotatif, sous la forme d'un polygone, notamment un carré,
- l'empreinte creuse présente une section de coupe, dans un plan orienté transversalement à l'axe de l'arbre rotatif, sous la forme d'un V.

L'invention sera bien comprise à l'aide de la description qui suit de modes particuliers de réalisation de l'invention donnés à titre d'exemples non limitatifs et représentés sur les dessins annexés, dans lesquels :
La Figure 1 est une vue schématique partielle d'une table de séparation d'un exemple d'installation de criblage selon l'invention.
Les Figures 2 et 3 représentent un exemple de mécanisme de verrouillage selon le principe de l'invention, respectivement à l'état assemblé et à l'état éclaté.
Les Figures 4A, 4B et 4C montrent la première partie d'arbre utilisée dans le montage des Figures 2 et 3, respectivement en vue de face, en vue de droite et en vue de dessus.
Les Figures 5A, 5B et 5C montrent la bague de serrage radial utilisée dans le montage des Figures 2 et 3, respectivement en vue de face, en vue de droite et en vue de dessus.
La Figure 6 illustre les premier et deuxième organes d'accouplement et le mécanisme de verrouillage dans un plan de coupe transversal à l'axe de l'arbre rotatif.

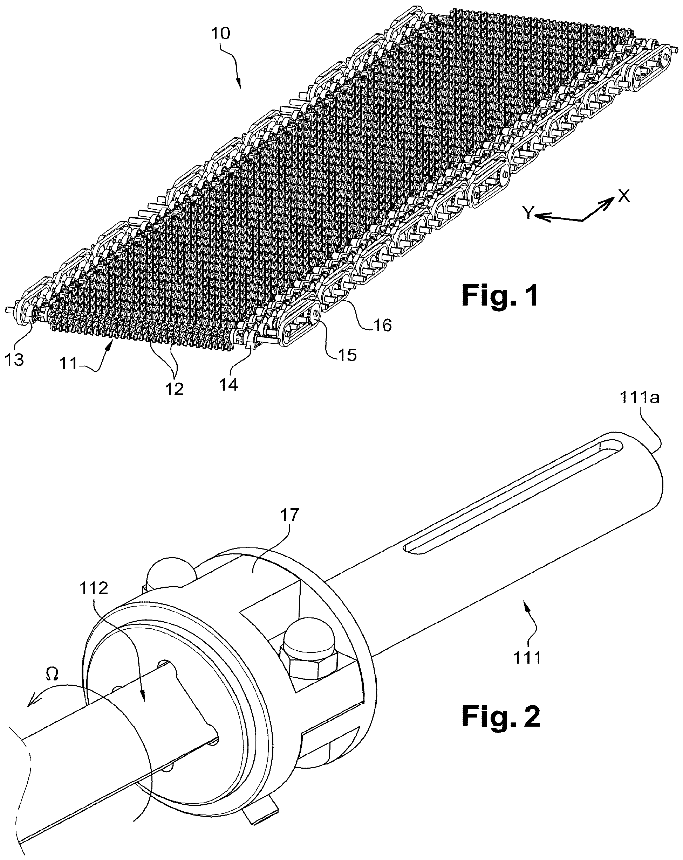

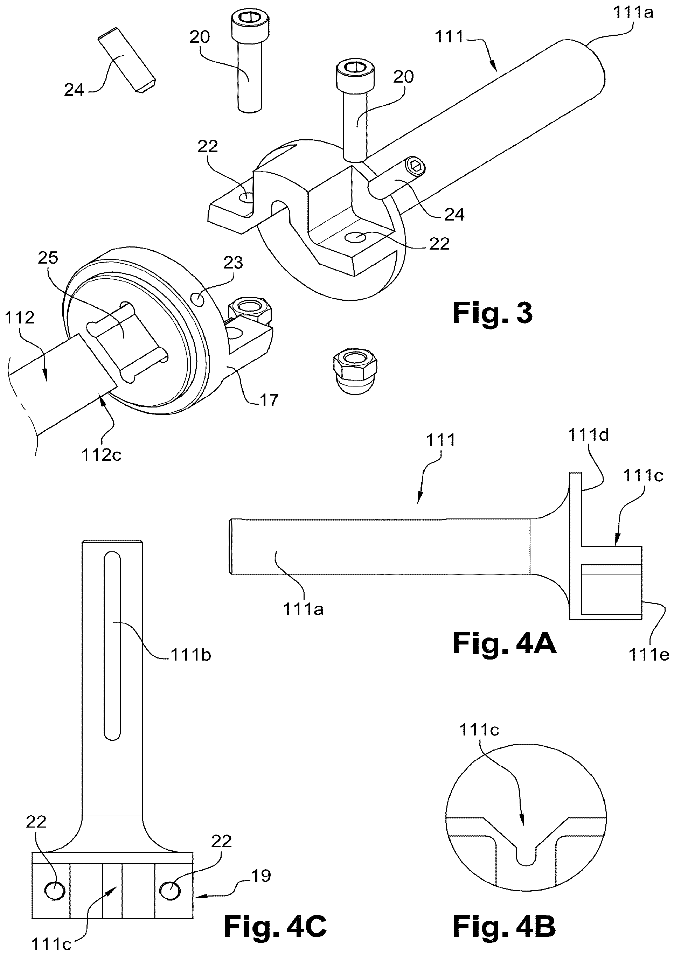

En référence aux Figures 1 à 6, une installation de criblage à étoiles rotatives, aussi connue sous le nom « crible à étoiles », comprend au moins une table de séparation 10 conçue pour séparer des marchandises en vrac déposées sur cette table de séparation 10 en parties fines passant à travers la table de séparation 10 et en parties grossières évacuées à une extrémité de la table de séparation 10.

En effet, l'installation peut comporter une seule table de séparation ou une pluralité de tables de séparation en série, au moins partiellement superposées de sorte que les parties fines séparées par une table de séparation donnée correspondent aux marchandises en vrac à séparer par la table de séparation suivante. La table de séparation 10 qui sera décrite plus loin correspond à la table de séparation unique dans le cas où l'installation ne comporte qu'une seule table de séparation ou constitue au moins l'une des tables de séparation de l'installation dans l'hypothèse où celle-ci comprend au moins deux tables de séparation en série.

De manière non représentée, l'installation comprend un système d'amenée, par exemple de type convoyeur ou de type trémie, qui apporte les marchandises en vrac qui sont à trier par la première table de séparation en fonction de leur volume. Au niveau de chaque table de séparation, l'installation comprend un système d'évacuation apte à évacuer les parties grossières séparées par cette table de séparation.

La table de séparation 10 comprend un châssis non représenté en forme de cadre, typiquement de forme rectangulaire, et une pluralité d'arbres rotatifs 11 parallèles entre eux. Notamment, les arbres rotatifs 11 sont tous parallèles au bord latéral du châssis correspondant à sa largeur orientée selon la direction latérale Y et sont échelonnés, notamment à intervalles réguliers, le long du bord longitudinal du châssis correspondant à sa longueur orientée selon la direction longitudinale X.

Chaque arbre rotatif 11 comprend une pluralité d'étoiles rotatives 12 espacées axialement le long de l'arbre rotatif 11 correspondant. Chaque étoile rotative 12 est typiquement formée dans une matière à base de caoutchouc et est démontable par rapport à l'arbre rotatif 11.

La table de séparation 10 est caractérisée par un taux granulométrique, qui correspond au volume frontière entre les parties fines et les parties grossières qu'elle sépare. Le taux granulométrique est par exemple ajusté en fonction de la forme ou du diamètre des étoiles rotatives 12 ou bien encore en fonction de l'espace axial séparant les étoiles rotatives 12 le long de l'arbre rotatif 11.

Chaque extrémité de chaque arbre rotatif 11 est montée sur le châssis par l'intermédiaire d'un mécanisme de guidage offrant une liaison pivot. Plus précisément, une première extrémité de chaque arbre rotatif 11 est montée sur le châssis par l'intermédiaire d'un premier palier 13 et une deuxième extrémité de chaque arbre rotatif 11 est montée sur le châssis par l'intermédiaire d'un deuxième palier 14.

L'installation de criblage comprend un mécanisme d'entrainement partiellement représenté, agencé le long de l'un des deux bords longitudinaux du châssis et accouplé à la deuxième extrémité de chacun des arbres rotatifs 11 afin d'entrainer les arbres rotatifs 11 dans un mouvement de rotation Ω. Notamment, la deuxième extrémité de chaque arbre rotatif 11 comprend une roue 15 pour s'accoupler à une chaine 16 du mécanisme d'entraînement en vue de son entraînement en rotation. Chaque chaine 16 est mise en mouvement directement ou indirectement par un moteur non représenté, notamment de type électrique.

Les premières extrémités des arbres rotatifs 11 peuvent également être accouplées entre elles dans leurs mouvements de rotation.

En référence aux Figures 1 et 2, chaque arbre rotatif 11 est subdivisé au niveau de sa deuxième extrémité en une première partie d'arbre 111 accouplée au mécanisme d'entrainement et une deuxième partie d'arbre 112 sur laquelle les étoiles rotatives sont montées. Il est bien compris que la première partie d'arbre 111 et la deuxième partie d'arbre 112 sont formées dans des pièces distinctes et séparées.

La première partie d'arbre 111 comprend une portion 111a permettant son accouplement avec le mécanisme d'entrainement. A titre d'exemple, la portion 111a est tournée du côté opposé à la zone destinée à être accouplée à la deuxième partie d'arbre 112, présente une section de coupe globalement circulaire tout en délimitant une gorge axiale 111b pour son accouplement en rotation avec le mécanisme d'entraînement, typiquement avec la roue 15 correspondante.

La première partie d'arbre 111 comprend également un premier organe d'accouplement 111c et la deuxième partie d'arbre 112 comprend un deuxième organe d'accouplement 112c. Le premier organe d'accouplement 111c et le deuxième organe d'accouplement 112c sont complémentaires de sorte à coopérer entre eux afin de coupler à rotation la première partie d'arbre 111 avec la deuxième partie d'arbre 112. Ainsi, les premier et deuxième organes d'accouplement 111c, 112c peuvent occuper une configuration d'accouplement dans laquelle le premier organe d'accouplement 111c et le deuxième organe d'accouplement 112c sont en prise mutuelle d'une manière telle que la première partie d'arbre 111 est couplée en rotation avec la deuxième partie d'arbre 112.

Préférentiellement, afin de faciliter le remontage, le passage vers la configuration d'accouplement des premier et deuxième organes d'accouplement 111c, 112c se pratique par un simple déplacement relatif entre les premier et deuxième organes d'accouplement 111c, 112c, orienté radialement, transversalement à l'axe de l'arbre rotatif.

Afin de faciliter le démontage, les premier et deuxième organes d'accouplement 111c, 112c sont préférentiellement configurés de sorte que le passage vers une configuration de désaccouplement, dans laquelle les premiers et deuxième organes d'accouplement 111c, 112c ne coopèrent pas afin que les deux parties d'arbre 111, 112 ne soient pas couplées en rotation, se pratique par un déplacement relatif orienté radialement entre les premier et deuxième organes d'accouplement 111c, 112c.

Dans ce document, la notion de « radial » associée à un arbre rotatif 11 donné correspond à toute direction orientée transversalement à l'axe de rotation de cet arbre rotatif 11.

Même si la nature et la conception des organes d'accouplement 111c, 112c peuvent être quelconques et n'apportent aucune limitation en tant que telles dès lors qu'ils remplissent les fonctions recherchées présentées ci-avant, un mode de réalisation particulier avantageux prévoit que l'un des premier et deuxième organes d'accouplement 111c, 112c soit constitué par une portion mâle s'étendant depuis le reste de la partie d'arbre 111, 112 correspondante.

Dans la variante illustrée sans que cela ne soit limitatif, la portion mâle constitue le deuxième organe d'accouplement 112c solidaire de la deuxième partie d'arbre 112.

En complément, de manière non limitative, l'autre des premier et deuxième organes d'accouplement 111c, 112c est constitué par une empreinte creuse de forme complémentaire à la portion mâle évoquée précédemment de sorte à pourvoir accueillir cette portion mâle au moins partiellement. L'empreinte creuse est partiellement ouverte transversalement à l'axe de l'arbre rotatif 11 de sorte à permettre la mise en place de la portion mâle dans l'empreinte creuse par un déplacement relatif radial entre la portion mâle et l'empreinte creuse transversalement à l'axe de l'arbre rotatif 11, conduisant à la configuration d'accouplement définie précédemment.

Dans la variante illustrée sans que cela ne soit limitatif, l'empreinte creuse constitue le premier organe d'accouplement 111c solidaire de la première partie d'arbre 111.

Il résulte de ce qui précède qu'il est toutefois tout à fait possible d'envisager des dispositions inversées dans lesquelles la portion mâle constituerait le premier organe d'accouplement 111c solidaire de la première partie d'arbre 111 qui est accouplée au mécanisme d'entraînement et dans lesquelles l'empreinte creuse constituerait le deuxième organe d'accouplement 112c solidaire de la deuxième partie d'arbre 112 sur laquelle les étoiles rotatives 12 sont montées.

Quelle que soit la variante retenue, et de la manière illustrée sur les Figures, la portion mâle présente avantageusement une section de coupe, dans un plan orienté transversalement à l'axe de l'arbre rotatif 11, sous la forme d'un polygone, notamment un carré. Une telle caractéristique favorise la transmission d'un couple mécanique élevé entre la première partie d'arbre 111 et la deuxième partie d'arbre 112, et ce à moindre coût et de manière fiable.

De manière complémentaire, l'empreinte creuse présente préférentiellement une section de coupe, dans un plan orienté transversalement à l'axe de l'arbre rotatif 11, sous la forme d'un V. Une telle caractéristique permet de mettre en place la portion mâle dans l'empreinte creuse par un simple déplacement relatif radial, ce qui facilite le démontage et le remontage.

Selon une caractéristique importante, chaque arbre rotatif 11 comprend un mécanisme de verrouillage fonctionnant par serrage radial transversalement à l'axe de l'arbre rotatif 11. Le mécanisme de verrouillage est susceptible d'occuper une configuration de verrouillage dans laquelle le mécanisme de verrouillage bloque, sous l'effet de ce serrage radial, les premier et deuxième organes d'accouplement 111c, 112c dans la configuration d'accouplement.

Il est compris qu'à l'inverse, le mécanisme de verrouillage peut occuper une configuration de déverrouillage dans laquelle les premier et deuxième organes d'accouplement 111c, 112c peuvent soit passer de la configuration d'accouplement vers la configuration de désaccouplement, soit passer de la configuration de désaccouplement vers la configuration d'accouplement.

La nature et la conception du mécanisme de verrouillage peuvent être quelconques et n'apportent aucune limitation en tant que telles dès lors qu'il remplit les fonctions recherchées présentées ci-avant.

Selon un mode de réalisation particulier mais non limitatif, qui donne une entière satisfaction en termes de simplicité, d'efficacité, de coût et de temps de démontage/remontage très faibles, le mécanisme de verrouillage comprend une bague de serrage radial 17 constituée par une pièce indépendante de la première partie d'arbre 111 et indépendante de la deuxième partie d'arbre 112. La bague de serrage radial 17 est conçue de sorte à pouvoir exercer un serrage radial centripète des premier et deuxième organes d'accouplement 111c, 112c dans la configuration d'accouplement.

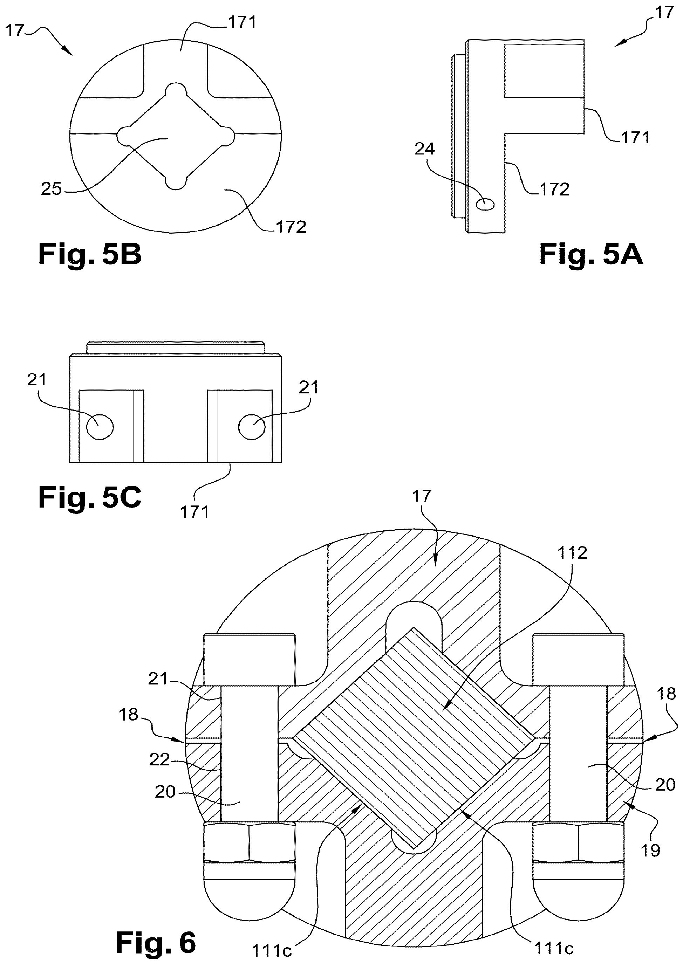

La bague de serrage radial 17 est représentée en détails sur les Figures 5A à 5C, selon différentes orientations afin de faciliter la compréhension de l'organisation de cette pièce par le lecteur.

Afin de faciliter et de prédéterminer le positionnement de la bague de serrage radial 17 par rapport à la première partie d'arbre 111, la bague de serrage radial 17 délimite une première paroi d'appui axial 171 capable de venir buter axialement contre une première paroi d'appui axial 111d délimitée par la première partie d'arbre 111. Par contre, la bague de serrage radial 17 délimite une deuxième paroi axiale 172 axialement distante d'une deuxième paroi axiale 111e délimitée par la première partie d'arbre 111 : un intervalle axial, par exemple de l'ordre de 0,3 mm, est présent entre la deuxième paroi axiale 172 et la deuxième paroi axiale 111^{e} afin de garantir que ce sont bien les parois 171 et 111d qui sont en contact l'une contre l'autre.

Préférentiellement, afin de faciliter le démontage et le remontage d'un arbre rotatif 11 en favorisant l'accès de la bague de serrage radial 17 par l'intérieur du cadre délimité par le châssis, la bague de serrage radial 17 est axialement positionnée le long de l'arbre rotatif 11 dans une zone située à l'intérieur du cadre du châssis. Cela évite de devoir intervenir par l'extérieur du cadre délimité par le châssis, en raison de la présence déjà existante et encombrante du mécanisme d'entraînement.

Pour les mêmes raisons, la bague de serrage radial 17 est préférentiellement positionnée axialement le long de l'arbre rotatif 11 du côté opposé au mécanisme d'entrainement par rapport au mécanisme de guidage correspondant. Autrement dit, le mécanisme de guidage en rotation (c'est-à-dire en particulier le palier 14) est axialement positionné entre la bague de serrage radial 17 et le mécanisme d'entraînement.

En référence à la Figure 6 maintenant, un intervalle radial 18 est interposé, dans la configuration de verrouillage du mécanisme de verrouillage, entre la bague de serrage radial 17 et une partie de serrage radial complémentaire 19. La présence de cet intervalle radial 18 a pour effet de garantir que la bague de serrage radial 17 exerce son effort de serrage directement sur le deuxième organe d'accouplement 112c.

La bague de serrage radial 17 et la partie de serrage radial complémentaire 19 agissent sur les premier et deuxième organes d'accouplement 111c, 112c à la manière de mors radiaux, typiquement à la manière de deux demicoquilles qui viennent enserrer radialement la liaison obtenue par les premier et deuxième organes d'accouplement 111c, 112c lorsqu'ils occupent leur configuration d'accouplement. A minima, le mécanisme de verrouillage sera préférentiellement conçu de sorte que la bague de serrage radial 17 et la partie de serrage radial complémentaire 19 enserrent le deuxième organe d'accouplement 112c solidaire de la deuxième partie d'arbre 112 sur laquelle les étoiles rotatives 12 sont montées.

Le mécanisme de verrouillage comprend à cet effet des moyens générant un effort sollicitant radialement la bague de serrage radial 17 en direction de la partie de serrage radial complémentaire 19 et/ou générant un effort sollicitant radialement la partie de serrage radial complémentaire 19 en direction de la bague de serrage radial 17.

A titre d'exemple avantageux en raison de sa simplicité, de son efficacité et de son coût, ces moyens pour générer un effort sollicitant la bague 17 et/ou la partie complémentaire 19 comprennent au moins un système de boulon 20, comprenant un écrou monté de manière hélicoïdale sur une vis correspondante.

Comme cela est visible sur la Figure 6, le mécanisme de verrouillage peut notamment comprendre deux tels systèmes de boulon 20 décalés entre eux transversalement à l'axe de l'arbre rotatif 11. Ils sont notamment situés de part et d'autre des premier et deuxième organes d'accouplement 111c, 112c afin d'équilibrer le serrage dans la configuration de verrouillage. Chaque système de boulon 20 traverse l'épaisseur de la bague de serrage radial 17 à travers une ouverture 21 correspondante et traverse l'épaisseur de la partie de serrage radial complémentaire 19 à travers une ouverture 22 taraudée correspondante. Chaque vis peut être de type CHC. Chaque écrou peut être de type borgne afin d'éviter une détérioration de ce dernier sous l'effet des matières en vrac qui passent à travers le crible à étoiles.

Bien que cela ne soit pas limitatif, il est avantageux de prévoir que la partie de serrage radial complémentaire 19 soit solidaire de la première partie d'arbre 111 ou de la deuxième partie d'arbre 112, pour des raisons de robustesse et de coût notamment. Cela n'empêche pas d'envisager que la partie de serrage radial complémentaire 19 soit constituée par une pièce indépendante de la première partie d'arbre 111 et indépendante de la deuxième partie d'arbre 112, à l'image de la bague de serrage radial 17.

La bague de serrage radial 17 délimite une ouverture traversante 25 dans laquelle la portion mâle, ici la deuxième partie d'arbre 112, est insérée axialement, la portion mâle qui vient au-delà de la bague 17 étant destinée à venir coopérer avec la première partie d'arbre 112 via les organes d'accouplement 111c, 112c. Le maintien axial de la bague 17 ainsi insérée, le long de la portion mâle, est assuré par l'intermédiaire d'au moins de vis de serrage 24, typiquement dépourvue de tête, venant se visser dans la bague 17 au niveau d'une ouverture 24 correspondante ménagée dans la bague 17. Le vissage de cette vis 24 permet d'exercer un effort transversal sur la portion mâle.

Dans un mode de réalisation particulier favorisant l'alignement axial entre la portion mâle, l'empreinte creuse et la bague 17, la section de l'ouverture traversante 25 est de forme polygonale complémentaire de celle de la section de coupe de la portion mâle.

Comme cela est représenté, la partie de serrage radial complémentaire 19 peut notamment venir de matière avec le reste de la première partie d'arbre 111, notamment sous la forme de deux parois radiales positionnées de part et d'autre de l'empreinte creuse constitutive du premier organe d'accouplement 111c.

Outre tous les avantages qui ont déjà été évoqués, l'installation de criblage à étoiles rotatives qui vient d'être décrite est robuste, permet un démontage et un remontage aisés et rapides (en moins de 5 minutes) de tout ou partie du train d'étoiles rotatives 12. L'installation de criblage supprime en outre les risques d'erreurs de remontage tout en étant simple, économique et conviviale d'utilisation.

Bien entendu, l'invention n'est pas limitée aux modes de réalisation représentés et décrits ci-avant, mais en couvre au contraire toutes les variantes telles que définies par les revendications.

## Revendications

1. Installation de criblage à étoiles rotatives, comprenant au moins une table de séparation (10) pour séparer des marchandises en vrac en parties fines passant à travers la table de séparation (10) et en parties grossières évacuées à une extrémité de la table de séparation (10), la table de séparation (10) comprenant un châssis en forme de cadre et une pluralité d'arbres rotatifs (11) parallèles, chaque arbre rotatif (11) comprenant une pluralité d'étoiles rotatives (12) espacées axialement le long de l'arbre rotatif (11) correspondant, chaque extrémité de chaque arbre rotatif (11) étant montée sur le châssis par l'intermédiaire d'un mécanisme de guidage (13, 14) offrant une liaison pivot, l'installation de criblage comprenant un mécanisme d'entrainement agencé le long d'un bord longitudinal du châssis et accouplé à une extrémité de chacun des arbres rotatifs (11) afin d'entrainer les arbres rotatifs (11) dans un mouvement de rotation (Ω), installation dans laquelle chaque arbre rotatif (11) est subdivisé au niveau d'au moins l'une de ses extrémités en une première partie d'arbre (111) accouplée au mécanisme d'entrainement et une deuxième partie d'arbre (112) sur laquelle les étoiles rotatives (12) sont montées, la première partie d'arbre (111) comprenant un premier organe d'accouplement (111c) et la deuxième partie d'arbre (112) comprenant un deuxième organe d'accouplement (112c), les premier et deuxième organes d'accouplement (111c, 112c) pouvant occuper une configuration d'accouplement dans laquelle les premier et deuxième organes d'accouplement (111c, 112c) sont en prise mutuelle d'une manière telle que la première partie d'arbre (111) est couplée en rotation avec la deuxième partie d'arbre (112), chaque arbre rotatif (11) comprenant un mécanisme de verrouillage **caractérisé en ce que** chaque mécanisme de verrouillage fonctionne par serrage radial transversalement à l'axe de l'arbre rotatif (11) et occupe une configuration de verrouillage dans laquelle le mécanisme de verrouillage bloque, sous l'effet dudit serrage radial, les premier et deuxième organes d'accouplement (111c, 112c) dans la configuration d'accouplement.

2. Installation de criblage selon la revendication 1, **caractérisée en ce que** le mécanisme de verrouillage comprend une bague de serrage radial (17) constituée par une pièce indépendante de la première partie d'arbre (111) et indépendante de la deuxième partie d'arbre (112), et exerçant un serrage radial centripète des premier et deuxième organes d'accouplement (111c, 112c) dans la configuration d'accouplement.

3. Installation de criblage selon la revendication 2, **caractérisée en ce que** la bague de serrage radial (17) est axialement positionnée le long de l'arbre rotatif (11) dans une zone située à l'intérieur du cadre du châssis.

4. Installation de criblage selon l'une quelconque des revendications 2 ou 3, **caractérisée en ce que** la bague de serrage radial (17) est axialement positionnée le long de l'arbre rotatif (11) du côté opposé au mécanisme d'entrainement par rapport au mécanisme de guidage (13, 14) correspondant.

5. Installation de criblage selon l'une quelconque des revendications 2 à 4, **caractérisée en ce que** dans la configuration de verrouillage du mécanisme de verrouillage, un intervalle radial (18) est interposé entre la bague de serrage radial (17) et une partie de serrage radial complémentaire (19), le mécanisme de verrouillage comprenant des moyens (20) générant un effort sollicitant radialement la bague de serrage radial (17) en direction de la partie de serrage radial complémentaire (19) et/ou générant un effort sollicitant radialement la partie de serrage radial complémentaire (19) en direction de la bague de serrage radial (17).

6. Installation de criblage selon la revendication 5, **caractérisée en ce que** la partie de serrage radial complémentaire (19) est solidaire de la première partie d'arbre (111) ou de la deuxième partie d'arbre (112).

7. Installation de criblage selon la revendication 6, **caractérisée en ce que** la partie de serrage radial complémentaire (19) vient de matière avec le reste de la première partie d'arbre (111) et **en ce que** la bague de serrage radial (17) et la partie de serrage radial complémentaire (19) enserrent le deuxième organe d'accouplement (112c).

8. Installation de criblage selon l'une quelconque des revendications 1 à 7, **caractérisée en ce que** le passage vers la configuration d'accouplement se pratique par un déplacement relatif radial entre les premier et deuxième organes d'accouplement (111c, 112c).

9. Installation de criblage selon l'une quelconque des revendications 1 à 8, **caractérisée en ce que** l'un des premier et deuxième organes d'accouplement (111c, 112c) est constitué par une portion mâle s'étendant depuis le reste de la partie d'arbre (111, 112) correspondante et **en ce que** l'autre des premier et deuxième organes d'accouplement (111c, 112c) est constitué par une empreinte creuse de forme complémentaire à ladite portion mâle de sorte à pourvoir accueillir au moins une partie de ladite portion mâle et partiellement ouverte transversalement à l'axe de l'arbre rotatif (11) de sorte à permettre la mise en place de ladite portion mâle dans l'empreinte creuse par un déplacement relatif radial entre ladite portion mâle et l'empreinte creuse transversalement à l'axe de l'arbre rotatif (11).

10. Installation de criblage selon la revendication 9, **caractérisé en ce que** la portion mâle constitue le deuxième organe d'accouplement (112c) solidaire de la deuxième partie d'arbre (112) et **en ce que** l'empreinte creuse constitue le premier organe d'accouplement (111c) solidaire de la première partie d'arbre (111).

11. Installation de criblage selon l'une quelconque des revendications 9 ou 10, **caractérisée en ce que** la portion mâle présente une section de coupe, dans un plan orienté transversalement à l'axe de l'arbre rotatif (11), sous la forme d'un polygone, notamment un carré.

12. Installation de criblage selon l'une quelconque des revendications 9 à 11, **caractérisée en ce que** l'empreinte creuse présente une section de coupe, dans un plan orienté transversalement à l'axe de l'arbre rotatif (11), sous la forme d'un V.

## Patentansprüche

1. Siebanlage mit Drehsternen, umfassend wenigstens einen Trenntisch (10), um Schüttgut in feine Teile, die durch den Trenntisch (10) hindurchgehen, und in grobe Teile zu trennen, die an einem Ende des Trenntischs (10) abgeführt werden, wobei der Trenntisch (10) ein Gestell in Form eines Rahmens und eine Vielzahl von parallelen Drehwellen (11) umfasst, wobei jede Drehwelle (11) eine Vielzahl von Drehsternen (12) umfasst, die entlang der entsprechenden Drehwelle (11) axial beabstandet sind, wobei jedes Ende jeder Drehwelle (11) auf dem Gestell mittels eines Führungsmechanismus (13, 14) montiert ist, der eine Drehverbindung bietet, wobei die Siebanlage einen Antriebsmechanismus umfasst, der entlang eines Längsrandes des Gestells angeordnet und an ein Ende jeder der Drehwellen (11) gekoppelt ist, um die Drehwellen (11) in eine Drehbewegung (Ω) zu versetzen, wobei bei der Anlage jede Drehwelle (11) auf Höhe wenigstens eines ihrer Enden in einen ersten Wellenteil (111), der an den Antriebsmechanismus gekoppelt ist, und einen zweiten Wellenteil (112) unterteilt ist, auf dem die Drehsterne (12) montiert sind, wobei der erste Wellenteil (111) ein erstes Kopplungselement (111c) umfasst, und der zweite Wellenteil (112) ein zweites Kopplungselement (112c) umfasst, wobei die ersten und zweiten Kopplungselemente (111c, 112c) eine Kopplungskonfiguration einnehmen können, in der die ersten und zweiten Kopplungselemente (111c, 112c) ineinandergreifen, sodass der erste Wellenteil (111) mit dem zweiten Wellenteil (112) drehgekoppelt ist, wobei jede Drehwelle (11) einen Verriegelungsmechanismus umfasst, **dadurch gekennzeichnet, dass** jeder Verriegelungsmechanismus durch radiale Klemmung quer zur Achse der Drehwelle (11) funktioniert und eine Verriegelungskonfiguration einnimmt, in der der Verriegelungsmechanismus unter der Wirkung der radialen Klemmung die ersten und zweiten Kopplungselemente (111c, 112c) in der Kopplungskonfiguration blockiert.

2. Siebanlage nach Anspruch 1, **dadurch gekennzeichnet, dass** der Verriegelungsmechanismus einen radialen Klemmring (17) umfasst, der aus einem Teil besteht, das unabhängig von dem ersten Wellenteil (111) und unabhängig von dem zweiten Wellenteil (112) ist, und der eine zentripetale radiale Klemmung der ersten und zweiten Kopplungselemente (111c, 112c) in der Kopplungskonfiguration ausübt.

3. Siebanlage nach Anspruch 2, **dadurch gekennzeichnet, dass** der radiale Klemmring (17) axial entlang der Drehwelle (11) in einem Bereich positioniert ist, der sich innerhalb des Rahmens des Gestells befindet.

4. Siebanlage nach einem der Ansprüche 2 oder 3, **dadurch gekennzeichnet, dass** der radiale Klemmring (17) axial entlang der Drehwelle (11) auf der Seite positioniert ist, die dem Antriebsmechanismus in Bezug auf den entsprechenden Führungsmechanismus (13, 14) entgegengesetzt ist.

5. Siebanlage nach einem der Ansprüche 2 bis 4, **dadurch gekennzeichnet, dass** in der Verriegelungskonfiguration des Verriegelungsmechanismus ein radialer Abstand (18) zwischen dem radialen Klemmring (17) und einem komplementären radialen Klemmteil (19) eingefügt ist, wobei der Verriegelungsmechanismus Mittel (20) umfasst, die eine Kraft erzeugen, die den radialen Klemmring (17) in Richtung des komplementären radialen Klemmteils (19) radial beansprucht, und/oder die eine Kraft erzeugen, die den komplementären radialen Klemmteil (19) in Richtung des radialen Klemmrings (17) radial beansprucht.

6. Siebanlage nach Anspruch 5, **dadurch gekennzeichnet, dass** der komplementäre radiale Klemmteil (19) fest mit dem ersten Wellenteil (111) oder dem zweiten Wellenteil (112) verbunden ist.

7. Siebanlage nach Anspruch 6, **dadurch gekennzeichnet, dass** der komplementäre radiale Klemmteil (19) einstückig mit dem Rest des ersten Wellenteils (111) hergestellt ist und dadurch, dass der radiale Klemmring (17) und der komplementäre radiale Klemmteil (19) das zweite Kopplungselement (112c) einschließen.

8. Siebanlage nach einem der Ansprüche 1 bis 7, **dadurch gekennzeichnet, dass** der Übergang in die Kopplungskonfiguration durch eine relative radiale Verschiebung zwischen den ersten und zweiten Kopplungselementen (111c, 112c) erfolgt.

9. Siebanlage nach einem der Ansprüche 1 bis 8, **dadurch gekennzeichnet, dass** eines der ersten und zweiten Kopplungselemente (111c, 112c) von einem Steckabschnitt gebildet wird, der sich ausgehend von dem Rest des entsprechenden Wellenteils (111, 112) erstreckt, und dadurch, dass das andere der ersten und zweiten Kopplungselemente (111c, 112c) von einer hohlen Vertiefung mit einer zum Steckabschnitt komplementären Form gebildet wird, um wenigstens einen Teil des Steckabschnitts aufnehmen zu können, und die quer zur Achse der Drehwelle (11) teilweise offen ist, um das Einsetzen des Steckabschnitts in die hohle Vertiefung durch eine relative radiale Verschiebung zwischen dem Steckabschnitt und der hohlen Vertiefung quer zur Achse der Drehwelle (11) zu ermöglichen.

10. Siebanlage nach Anspruch 9, **dadurch gekennzeichnet, dass** der Steckabschnitt das zweite Kopplungselement (112c) bildet, das fest mit dem zweiten Wellenteil (112) verbunden ist, und dadurch, dass die hohle Vertiefung das erste Kopplungselement (111c) bildet, das fest mit dem ersten Wellenteil (111) verbunden ist.

11. Siebanlage nach einem der Ansprüche 9 oder 10, **dadurch gekennzeichnet, dass** der Steckabschnitt einen Querschnitt, in einer Ebene, die quer zur Achse der Drehwelle (11) ausgerichtet ist, in Form eines Vielecks, insbesondere eines Quadrats, aufweist.

12. Siebanlage nach einem der Ansprüche 9 bis 11, **dadurch gekennzeichnet, dass** die hohle Vertiefung einen Querschnitt, in einer Ebene, die quer zur Achse der Drehwelle (11) ausgerichtet ist, in Form eines V aufweist.

## Claims

1. A rotary star screening plant, comprising at least one separation table (10) for separating bulk goods into fine components passing through the separation table (10) and into coarse components discharged at one end of the separation table (10), the separation table (10) comprising a frame-shaped chassis and a plurality of parallel rotary shafts (11), each rotary shaft (11) comprising a plurality of rotary stars (12) spaced axially along the corresponding rotary shaft (11), each end of each rotary shaft (11) being mounted on the chassis via a guide mechanism (13, 14) providing a pivot connection, the screening plant comprising a drive mechanism arranged along a longitudinal edge of the chassis and coupled to one end of each of the rotary shafts (11) in order to drive the rotary shafts (11) in a rotational movement (Ω), wherein each rotary shaft (11) is subdivided at at least one of its ends into a first shaft portion (111) coupled to the drive mechanism and a second shaft portion (112) on which the rotary stars (12) are mounted, the first shaft portion (111) comprising a first coupling member (111c) and the second shaft portion (112) comprising a second coupling member (112c), the first and second coupling members (111c, 112c) being capable of occupying a coupling configuration in which the first and second coupling members (111c, 112c) are inter-engaged in such a way that the first shaft portion (111) is rotatably coupled with the second shaft portion (112), each rotary shaft (11) comprising a locking mechanism **characterized in that** each locking mechanism operates by radial clamping transversely to the axis of the rotary shaft (11) and occupies a locking configuration in which the locking mechanism locks, under the effect of said radial clamping, the first and second coupling members (111c, 112c) in the coupling configuration.

2. The screening plant according to claim 1, **characterized in that** the locking mechanism comprises a radial clamping ring (17) consisting of a part independent of the first shaft portion (111) and independent of the second shaft portion (112), and exerting a centripetal radial clamping of the first and second coupling members (111c, 112c) in the coupling configuration.

3. The screening plant according to claim 2, **characterized in that** the radial clamping ring (17) is axially positioned along the rotary shaft (11) in an area located inside the frame of the chassis.

4. The screening plant according to any one of claims 2 or 3, **characterized in that** the radial clamping ring (17) is axially positioned along the rotary shaft (11) on the side opposite to the drive mechanism with respect to the corresponding guide mechanism (13, 14).

5. The screening plant according to any one of claims 2 to 4, **characterized in that**, in the locking configuration of the locking mechanism, a radial clearance (18) is interposed between the radial clamping ring (17) and a complementary radial clamping portion (19), the locking mechanism comprising means (20) generating a force radially biasing the radial clamping ring (17) in the direction of the complementary radial clamping portion (19) and/or generating a force radially biasing the complementary radial clamping portion (19) in the direction of the radial clamping ring (17).

6. The screening plant according to claim 5, **characterized in that** the complementary radial clamping portion (19) is secured to the first shaft portion (111) or to the second shaft portion (112).

7. The screening plant according to claim 6, **characterized in that** the complementary radial clamping portion (19) is integral with the rest of the first shaft portion (111) and **in that** the radial clamping ring (17) and the complementary radial clamping portion (19) enclose the second coupling member (112c).

8. The screening plant according to any one of claims 1 to 7, **characterized in that** the passage to the coupling configuration is practiced by a radial relative displacement between the first and second coupling members (111c, 112c).

9. The screening plant according to any one of claims 1 to 8, **characterized in that** one of the first and second coupling members (111c, 112c) consists of a male portion extending from the rest of the corresponding shaft portion (111, 112) and **in that** the other of the first and second coupling members (111c, 112c) consists of a hollow recess having a shape complementary to the said male portion so as to be able to accommodate at least a part of said male portion and partially open transversely to the axis of the rotary shaft (11) so as to allow the establishment of said male portion in the hollow recess by a radial relative displacement between said male portion and the hollow recess transversely to the axis of the rotary shaft (11).

10. The screening plant according to claim 9, **characterized in that** the male portion constitutes the second coupling member (112c) secured to the second shaft portion (112) and **in that** the hollow recess constitutes the first coupling member (111 c) secured to the first shaft portion (111).

11. The screening plant according to any one of claims 9 or 10, **characterized in that** the male portion has a cross section, in a plane oriented transversely to the axis of the rotary shaft (11), in the form of a polygon, in particular a square.

12. The screening plant according to any one of claims 9 to 11, **characterized in that** the hollow recess has a cross section, in a plane oriented transversely to the axis of the rotary shaft (11), in the form of a V.
